# FASCICULE DE BREVET EUROPEEN

(11) **EP 4 147 551 B1**
(45) Date de publication et mention de la délivrance du brevet: **24.07.2024**
(21) Numéro de dépôt: 22194501.7
(22) Date de dépôt: 08.09.2022
(51) Int. Cl.: A01B 59/043, A01B 3/46, A01B 59/06

(54) **MACHINE AGRICOLE AVEC UNE TÊTE D'ATTELAGE MUNI D'UN DISPOSITIF DE VERROUILLAGE EN TRANSLATION**
LANDWIRTSCHAFTLICHE MASCHINE MIT EINEM KUPPLUNGSKOPF, DER MIT EINER TRANSLATIONSVERRIEGELUNGSVORRICHTUNG VERSEHEN IST
AGRICULTURAL MACHINE WITH A COUPLING HEAD PROVIDED WITH A TRANSLATIONAL LOCKING DEVICE

(30) Priorité: 10.09.2021 FR 2109488
(43) Date de publication de la demande: 15.03.2023
(73) Titulaire: Kuhn-Huard S.A.S, 44110 Chateaubriant (FR)
(72) Inventeur: DUCROQUET, Frédéric, 44110 VILLEPOT (FR); GAUTRON, Herrman, 44670 SAINT JULIEN DE VOUVANTES (FR)
(74) Mandataire: Hager, Esther Evelyne

(56) Documents cités:
- EP-B1- 3 035 786
- DE-U1- 9 010 011
- FR-A1- 2 651 637

## Description

La présente invention concerne le domaine du machinisme agricole, en particulier des machines attelées à un véhicule tracteur lors de leur utilisation (ou travail) et leur transport, notamment celles comportant une tête d'attelage dite oscillante ou à palonnier. Dans ce contexte, l'invention porte sur une machine du type précité muni d'un dispositif de verrouillage en translation de la traverse d'attelage de la tête d'attelage.

L'invention vise plus particulièrement une machine agricole, en particulier charrue destinée à être déplacée selon une direction d'avance en configuration de travail et en configuration de transport et qui est du type comprenant un bâti portant au moins un outil et une tête d'attelage pour sa liaison avec un dispositif d'attelage trois points d'un véhicule tracteur. La tête d'attelage comprend, d'une part, une traverse d'attelage comportant à ses deux extrémités opposées des attaches destinées à venir en engagement avec les deux points d'attelage inférieurs du dispositif d'attelage trois points, et, d'autre part, une pièce d'assemblage articulé pour ladite traverse, qui est solidaire du bâti et reçoit cette traverse dans un espace plan de montage dans lequel elle est mobile avec guidage en translation et en rotation par l'intermédiaire d'une liaison pivot / glissière. L'axe du pivot est perpendiculaire au plan de l'espace de montage, la glissière est sensiblement rectiligne et parallèle audit plan et à la direction d'avance et comporte des extrémités avant et arrière opposées. Les mouvements de rotation relatifs entre la traverse et la pièce d'assemblage articulé sont limités par des butées, respectivement avant et arrière par rapport à la direction d'avance, et dans laquelle le pivot est solidaire de la traverse et est en appui contre l'extrémité avant de ladite glissière lorsque ladite machine est soumise à une force de traction selon la direction d'avance par l'intermédiaire de ladite traverse.

La glissière, par exemple sous la forme d'un trou oblong orienté selon la direction d'avance, permet d'augmenter l'angle de braquage entre le tracteur et la machine lors des manoeuvres, notamment les demi-tours. Le pivot peut se déplacer librement dans cette glissière, ce qui permet notamment de modifier la distance entre le tracteur et la machine, une distance plus grande autorisant un angle de braquage plus court.

Toutefois, cette possibilité de mouvement en translation relatif est pénalisant lors des phases d'accélération et de freinage durant le transport, plus particulièrement pour une machine semi-portée ou tractée. En effet, dans ces phases, le pivot vient heurter les extrémités avant et arrière de la glissière, et le cas échéant les butées avant et arrière, selon que le tracteur freine ou accélère. Les chocs résultants se répercutent via les attaches sur les bras inférieurs du dispositif d'attelage trois points du tracteur. En fonction du poids de la machine, de l'énergie cinétique acquise du fait de la vitesse de déplacement de l'attelage tracteur/machine et de la taille de la glissière, les chocs peuvent être intenses et donc endommager la tête d'attelage de la machine et/ou le dispositif trois points du tracteur. En outre, lors des prises de virages sur routes, la machine trainée ne suit pas la trace du véhicule tracteur et chasse vers l'extérieur, en effectuant généralement une courbe de plus grand rayon, sans véritable contrôle de la trajectoire. Enfin, les manoeuvres en marche arrière sont pratiquement incontrôlables avec une telle liberté en translation.

Dans l'état de la technique, on connait par le document FR 2 651 637 une charrue semi-portée pour laquelle ces problèmes se posent, sans qu'une solution soit proposée ou suggérée.

La présente invention a pour but de pallier ces inconvénients et d'apporter une solution simple au problème exposé ci-dessus.

A cet effet, elle a pour objet une machine du type évoquée en introduction et caractérisée en ce que la pièce d'assemblage articulé de la tête d'attelage comporte d'une part, un moyen d'accrochage du pivot, préférentiellement du type escamotable par pivotement, bloquant sa translation dans la glissière en direction de l'extrémité arrière lorsque cette pièce est soumise à un déplacement relatif selon la direction d'avance par rapport à la traverse d'attelage, et, d'autre part, un moyen de sollicitation élastique qui réalise un engagement automatique dudit moyen d'accrochage avec ledit pivot lorsque ce dernier se retrouve positionné dans la glissière au-delà d'une distance déterminée par rapport à l'extrémité arrière.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1A] et
Fig. 1B] sont des vues d'une machine selon l'invention sous la forme d'une charrue, respectivement en position de travail (labour à droite) et en position de transport ;
[Fig. 2] est une vue partielle de l'ensemble potence/tête d'attelage d'une machine agricole, par exemple une charrue ;
[Fig. 3A] et
[Fig. 3B] sont des vues partielles en perspective représentant la tête d'attelage faisant partie de l'ensemble montré sur la figure 2, la tête d'attelage étant en position déverrouillée à l'extrémité arrière de la glissière ;
[Fig. 4] et
[Fig. 5] sont des vues partielles simplifiées illustrant le mode de fonctionnement du dispositif de verrouillage en translation de l'invention, dans deux états différents (juste avant et après engagement verrouillant).

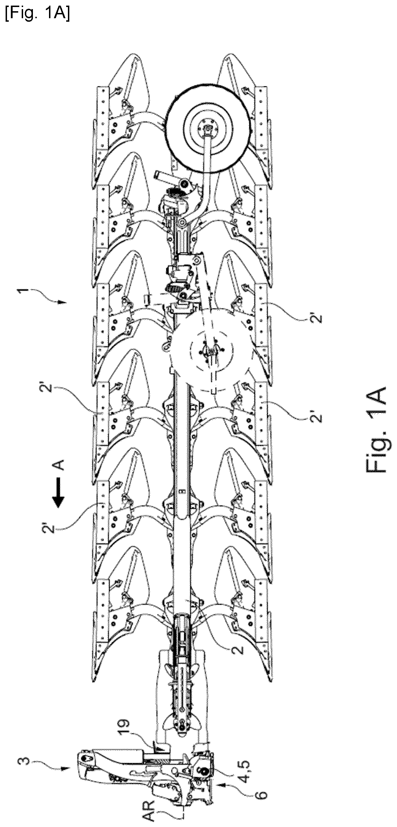

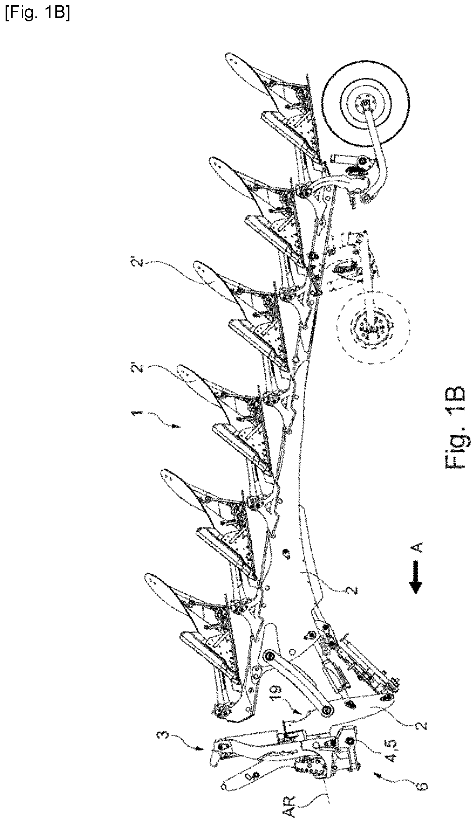

Les figures 1 montrent une machine agricole (1), ici en particulier une charrue, destinée à être déplacée selon une direction d'avance (A) en configuration de travail (ou d'utilisation) et en configuration de transport et comprenant un bâti (2) portant au moins un outil (2') et une tête d'attelage (3) pour sa liaison avec un dispositif d'attelage trois points d'un véhicule tracteur. La tête d'attelage (3) comprend, d'une part, une traverse d'attelage (4) comportant à ses deux extrémités opposées des attaches (5) destinées à venir en engagement avec les deux points d'attelage inférieurs du dispositif d'attelage trois points, et, d'autre part, une pièce (6) d'assemblage articulé pour ladite traverse (4), qui est solidaire du bâti (2) et reçoit cette traverse (4) dans un espace plan de montage (PM) dans lequel elle est mobile avec guidage en translation et en rotation par l'intermédiaire d'une liaison pivot (7) / glissière (8). L'axe (AP) du pivot (7) -par exemple sous la forme d'une portion de tige cylindrique- est perpendiculaire au plan de l'espace de montage (PM), la glissière (8) est sensiblement rectiligne et parallèle audit plan et à la direction d'avance (A) et comporte des extrémités avant et arrière (8', 8") opposées. Dans cette machine (1), les mouvements de rotation relatifs entre la traverse (4) et la pièce d'assemblage articulé (6) sont limités par des butées, respectivement avant (9) et arrière (10) par rapport à la direction d'avance (A), et le pivot (7) est solidaire de la traverse (4) et est en appui contre l'extrémité avant (8') de ladite glissière (8) lorsque ladite machine (1) est soumise à une force de traction selon la direction d'avance (A) par l'intermédiaire de ladite traverse (4). Grâce à la glissière (8) orientée selon la direction d'avance (A), la traverse d'attelage (4) est apte à se déplacer en translation par rapport à la pièce d'assemblage (6) articulé pour augmenter l'angle de braquage entre le tracteur et la machine agricole (1). L'axe (AP) du pivot (7) comme la glissière (8) s'étendent avantageusement dans le plan vertical médian de la tête d'attelage (3). La glissière (8) est disposée au milieu de la pièce d'assemblage (6) articulé. L'axe (AP) est disposé au centre de la traverse (4), et au milieu entre les deux extrémités opposées des attaches (5). Les butées arrière (10) sont espacées l'une de l'autre, elles s'étendent de part et d'autre de la glissière (8). Elles sont disposées à une extrémité latérale de la pièce d'assemblage (6) articulé. Les deux butées arrière (10) sont alignées et disposées perpendiculairement par rapport à la glissière (8). La butée avant (9) limite la rotation de la traverse (4) lors des manoeuvres du véhicule tracteur, en virages à droite ou à gauche. La butée avant (9) est disposée sur l'axe de symétrie médian de la tête d'attelage (3). Sa disposition sur l'axe de symétrie permet un débattement angulaire de la traverse (4) identique pour une manoeuvre à droite et une manoeuvre à gauche. La butée avant (9) est avantageusement disposée devant la glissière (8), compte tenu de la direction d'avance (A), et dans l'alignement de l'axe longitudinal (AL) de cette glissière. La glissière (8) est disposée dans le triangle formé par les trois butées (9, 10). Selon une alternative non représentée, la butée avant (9) peut être positionnée dans la glissière (8).

La figure 1A illustre une machine sous forme de charrue réversible (1) dans sa configuration de travail, ici labour à droite. La charrue comporte deux groupes de corps de labour (2'), arrangés de part et d'autre pour un travail de labour respectivement à droite ou à gauche par rapport à la direction d'avance (A). Le bâti (2) est relié à la tête d'attelage (3) par une liaison pivot (19) définissant un axe de retournement (AR) pour le passage réversible d'une configuration de travail à l'autre, par pivotement d'environ un demi-tour. Dans la configuration de travail, la charrue (1) est accrochée au dispositif d'attelage trois points du véhicule tracteur, on dit que la charrue est portée. Le bâti (2) porte une roue pour le contrôle de la profondeur des corps de labour. Cette roue est implantée soit à l'arrière du bâti (2) ou soit latéralement sur le bâti (2). Lors de la configuration de transport telle que représentée sur la figure 1B, la machine agricole (1), et particulièrement la charrue, repose au sol à l'arrière au moyen d'une roue et à l'avant via les deux points d'attelage inférieurs (5) du dispositif d'attelage trois points. Au transport, la bielle supérieure -associée au point d'attelage supérieur (5')- est désaccouplée pour que la charrue puisse être traînée derrière le tracteur (uniquement attachée par les points d'attelage inférieurs) pour épouser les éventuelles dénivellations du terrain. La charrue est alors trainée ou semi-portée à l'arrière du tracteur comme une remorque. Ainsi, on dit que cette charrue est portée au travail et semi-portée au transport. D'une manière particulière, la roue en position arrière est représentée en traits continus sur les figures 1A et 1B et l'implantation latérale est représentée en traits discontinus. Lorsque la roue remplie la fonction de réglage de profondeur de travail et la fonction d'appui au sol au transport, on parle d'une roue combinée. En comparant les figures 1A et 1B, on peut relever que la tête d'attelage (3) comporte une potence en deux parties, une partie avant et une partie arrière qui sont mobiles en rotation entre elles. La partie avant est reliée à la bielle supérieure et est susceptible de pivoter par rapport à la partie arrière autour d'un axe de potence sensiblement horizontal et perpendiculaire à l'axe de retournement. Les deux parties sont solidarisées et le pivotement bloqué lorsqu'un moyen de blocage, par exemple sous la forme d'une anse ou d'une 'casquette', est abaissé (figure 1A).

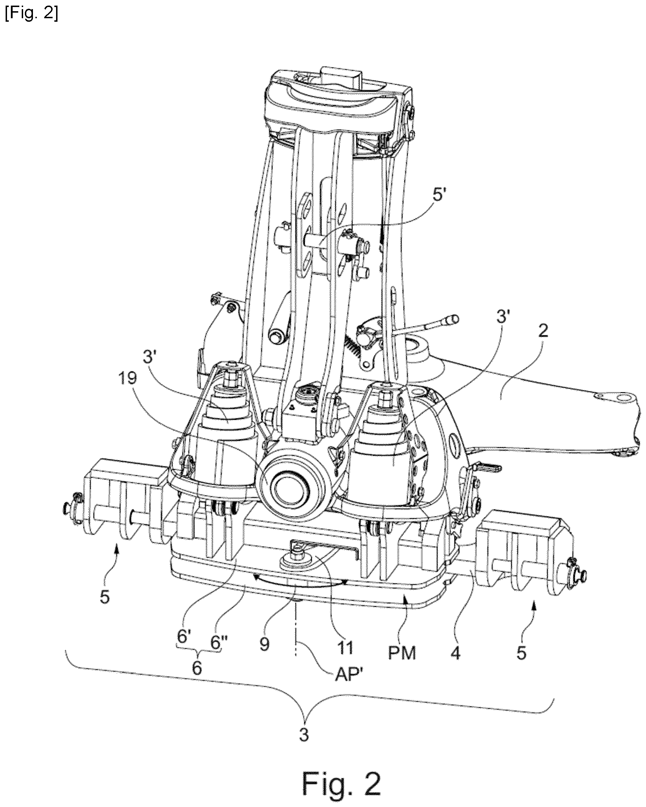

La figure 2 illustre la tête d'attelage (3) d'une machine agricole (1) et notamment le dispositif d'attelage trois points et une partie du bâti (2) dans l'une des positions de travail. Cette tête d'attelage (3) est équipée d'une suspension, sous forme de ressorts volute (3'), disposée à l'avant de part et d'autre de l'axe de retournement AR.

Conformément à l'invention, cette machine (1) est caractérisée en ce que la pièce (6) d'assemblage articulé de la tête d'attelage (3) comporte d'une part, un moyen (11) d'accrochage du pivot (7), préférentiellement du type escamotable par pivotement, bloquant sa translation dans la glissière (8) en direction de l'extrémité arrière (8") lorsque cette pièce (6) est soumise à un déplacement relatif selon la direction d'avance (A) par rapport à la traverse d'attelage (4), et, d'autre part, un moyen (12) de sollicitation élastique qui réalise un engagement automatique dudit moyen d'accrochage (11) avec ledit pivot (7) lorsque ce dernier se retrouve positionné dans la glissière (8) au-delà d'une distance déterminée par rapport à l'extrémité arrière (8"), autrement dit en-dessous d'une distance complémentaire de l'extrémité avant (8') de cette glissière.

Grâce à l'invention, les inconvénients de l'état de la technique sont surmontés par le biais d'une solution constructivement simple, réalisant automatiquement au moins une limitation de la possibilité de translation du pivot (7) dans la glissière (8). En particulier, durant les phases d'accélération et de décélération lors du transport, les chocs du pivot (7) contre l'extrémité arrière (8") sont totalement évités et les chocs contre l'extrémité avant sont au moins notablement réduits, ce en fonction du degré de liberté restant en translation laissé audit pivot (7).

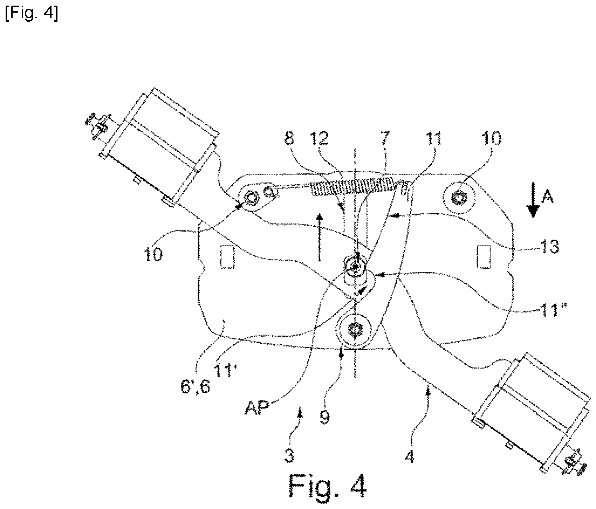

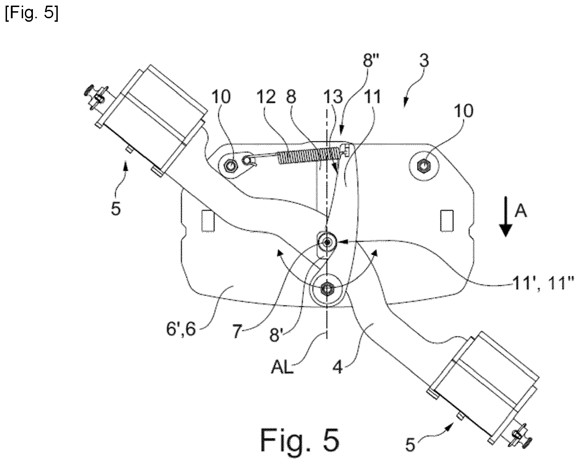

Préférentiellement, et comme le montrent les figures 4 et 5, le moyen d'accrochage (11) comporte un site d'engagement (11') qui est configuré et agencé de telle manière que l'engagement automatique dudit moyen d'accrochage (11) avec le pivot (7) s'opère lorsque ledit pivot (7) arrive à proximité immédiate ou vient en appui contre l'extrémité avant (8') de la glissière (8), ledit pivot (7) étant sensiblement bloqué en translation dans la glissière (8) entre ledit site (11') et ladite extrémité (8') à l'état engagé.

En accord avec une caractéristique constructive bénéfique de l'invention, le moyen de sollicitation élastique (12) et le moyen d'accrochage (11), notamment le site d'engagement (11') de ce dernier, sont configurés et agencés de telle manière que l'engagement d'accrochage avec le pivot (7) est maintenu élastiquement et n'est défait que lors d'un soulèvement de la machine (1), sous l'effet de la poussée du poids de cette dernière sur la pièce (6) d'assemblage articulé et le moyen d'accrochage (11). En particulier, la sollicitation élastique exercée sur le moyen d'accrochage (11) à l'état engagé présente une intensité suffisante pour préserver l'accrochage du pivot (7) durant les manoeuvres des phases de transport. Le soulèvement de la machine consiste en un relevage de la partie avant de la machine en particulier de la tête d'attelage (3) via le dispositif d'attelage trois points du véhicule tracteur.

En vue d'assurer une coopération permanente entre le pivot (7) et le moyen d'accrochage (11), débouchant sur un engagement garanti entre eux lorsque les conditions sont réunies, ledit moyen d'accrochage (11) comporte un profil de glissement (13) contre lequel vient en appui, sous la contrainte du moyen de sollicitation élastique (12), le pivot (7) lorsqu'il n'est pas en engagement accrochant avec ledit moyen (11), ledit profil de glissement (13) débouchant dans un site (11') d'engagement accrochant dudit pivot (7), à l'une de ses extrémités, et s'étendant par son autre extrémité au-delà de l'extrémité arrière (8') de la glissière (8). Une telle conformation et un tel dimensionnement du moyen d'accrochage (11), associés à la sollicitation élastique permanente du moyen (12), garanti le contact permanent recherché.

Selon un mode de réalisation avantageux de l'invention, illustré aux figures 4 et 5, le pivot (7) présente une section circulaire et le moyen d'accrochage (11) comporte un site (11') d'engagement avec ledit pivot (7) qui présente un profil (11") en arc de cercle de forme complémentaire et ouvert sur un côté, ce profil (11") s'étendant angulairement (légèrement) au-delà de l'axe longitudinal (AL) de la glissière (8) lorsque le pivot (7) est engagé dans ledit site (11'), ce d'environ 1° à 15°. En complément ou en variante, la zone de transition entre le site (11') et le profil (13) peut présenter un bord en pente, formant par exemple un angle compris entre 91° et 105° avec l'axe longitudinal (AL), lorsque le moyen d'accrochage (11) est dans la position où il engage le pivot (7).

Ainsi, et comme l'illustre la figure 5, en configuration de transport et d'engagement du pivot et du moyen d'accrochage, seule une rotation de la traverse (4) par rapport à la tête d'attelage (3) est possible, et l'engagement est préservé dans toute la plage angulaire autorisée pour ladite traverse (4), et limitée par les butées avant et arrière (9,10).

Conformément à une variante constructive préférée, ressortant des figures annexées, le moyen d'accrochage (11) se présente sous la forme d'un bras (par exemple découpé dans une plaque) monté pivotant sur la pièce d'assemblage articulé (6) et le moyen de sollicitation élastique (12) consiste en un ressort de rappel. L'axe de pivotement (AP') dudit bras (11) est aligné avec l'axe longitudinal (AL) de la glissière (8) et situé au-delà de l'extrémité avant (8') de celle-ci dans la direction d'avance (A) et ledit moyen d'accrochage (11) comporte un site (11') d'engagement du pivot (7) sous la forme d'un cran, ouvert sur le côté du bras (11) présentant le profil de glissement (13) pour le pivot (7), débouchant dans ledit cran (11'), préférentiellement après passage d'un point dur.

Par exemple, le profil de glissement (13) peut présenter une configuration en pente de telle manière que l'intensité de la sollicitation élastique augmente lorsque le pivot (7) se dirige vers l'extrémité avant (8') de la glissière (8) et tend à déplacer le bras (11) à l'écart de l'axe longitudinal (AL) de la glissière, la sollicitation étant maximale juste avant l'engagement accrochant (point dur). De même, le profil et l'extension circulaire du cran (11') du côté ouvert peuvent être déterminés de manière telle qu'un désengagement s'opère en cas de réalisation d'une manoeuvre particulière, générant une contrainte importante sur le pivot (7) et interdite durant le transport de la machine (1), par exemple en cas de soulèvement de cette dernière par le véhicule tracteur.

Avantageusement, le ressort (12) est fixé au niveau de l'extrémité libre du bras (11) et son profil de glissement (13) s'étend sensiblement entre cette extrémité et le cran (11'), avec une extension longitudinale inférieure à celle de la glissière (8).

En vue d'optimiser et de simplifier la construction de tête d'attelage (3), en limitant notamment le nombre d'éléments constitutifs, il peut être prévu que la pièce d'assemblage articulé (6) comporte une butée avant (9) formant l'axe de pivotement (AP') du bras (11) et/ou deux butées arrière (10) dont l'une sert de point de fixation au moyen de sollicitation élastique (12).

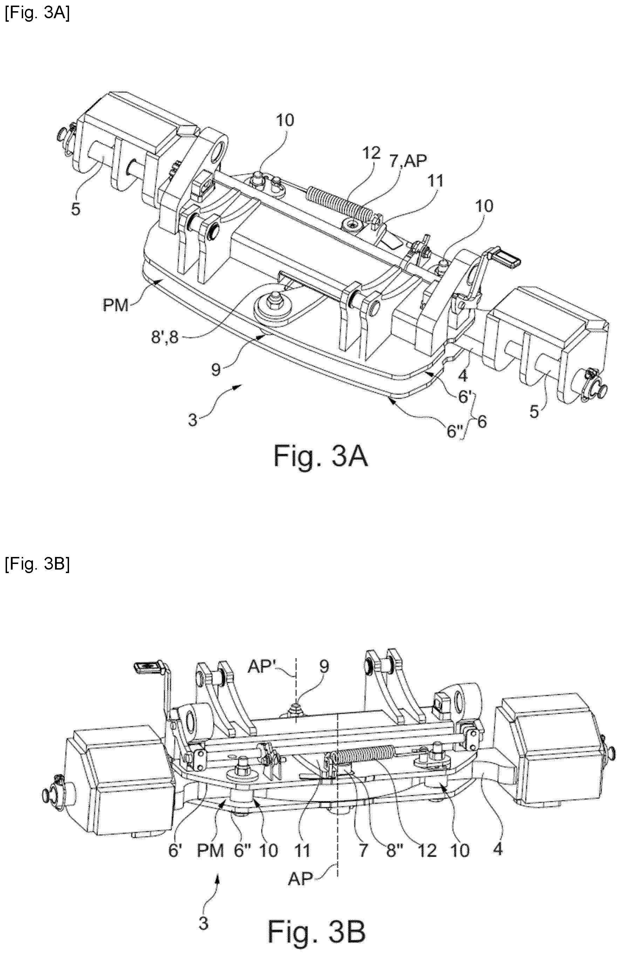

Conformément à une variante constructive préférée, ressortant également des figures 2 à 5, le moyen d'accrochage (11) et le moyen de sollicitation élastique (12) sont tous deux situés dans l'encombrement latéral de la pièce d'assemblage articulé (6). Avantageusement, le moyen d'accrochage (11) et le moyen de sollicitation élastique (12) s'étendent dans le triangle formé par la butée avant (9) et les butées arrière (10). Cette dernière étant avantageusement formée de deux plaques superposées (6' et 6") délimitant entre elles l'espace de montage plan (PM) et assemblées mutuellement par des entretoises formant les butées avant et arrière (9, 10), les moyens (11, 12) précités étant préférentiellement montés sur la plaque (6') supérieure. Ainsi, ces deux moyens se trouvent protégés et n'interfèrent pas avec l'environnement extérieur autour de la tête d'attelage (3). Selon un exemple non représenté, les deux moyens (11, 12) peuvent être prévus sur la plaque inférieure (6"), sur sa face inférieure.

La tête d'attelage (3), et plus particulièrement la pièce (6), peut aussi comprendre un dispositif de verrouillage bloquant de la traverse d'attelage en coopération avec des butées arrière, préférentiellement à deux verrous et à commande unique.

La machine agricole selon l'invention peut être déclinée sous différentes variantes de réalisation et l'invention trouver application en particulier dans différents types de machines (1) de travail du sol, tels que des déchaumeurs ou analogues, ou des machines de fenaison tels que des faucheuses, andaineurs ou faneurs. Toutefois, on aboutit à une mise en oeuvre particulièrement favorable et bénéfique de l'invention lorsque la machine (1) consiste en une charrue, avantageusement munie d'au moins une roue support destinée à s'appuyer sur le sol, au moins dans la configuration de transport. La charrue comprend préférentiellement également une roue pour le contrôle de profondeur de travail. En variante, une unique roue dite combinée peut remplir les deux fonctions précitées.

L'invention vise également un procédé de verrouillage automatique en translation de la traverse d'attelage (4) d'une machine agricole (1) telle que décrite ci-dessus, caractérisé en ce qu'il consiste à provoquer, en configuration de transport, un déplacement relatif entre le bâti (2) de la machine (1) et le véhicule tracteur selon la direction d'avance (A) résultant en un déplacement du pivot (7) dans la glissière (8) en direction de l'extrémité avant de cette dernière, ce jusqu'à engagement dudit pivot (7) par le moyen d'accrochage (11). Un tel verrouillage peut par exemple être obtenu lors d'une première action freinage gratuite ou circonstanciée en mode transport.

Enfin, l'invention porte également sur un procédé de déverrouillage automatique en translation de la traverse d'attelage (4) d'une machine agricole (1) telle que décrite ci-dessus, par exemple verrouillée automatiquement par le biais du procédé de verrouillage précité, caractérisé en ce qu'il consiste à réaliser un soulèvement de ladite machine (1) par le dispositif d'attelage trois points du véhicule tracteur auquel elle est attelée.

On peut relever que dans les deux procédés ci-dessus, le déplacement relatif fonctionnel du pivot (7) par rapport à la glissière (8) résulte en fait toujours soit d'une intention expresse de l'opérateur, soit d'une conséquence secondaire d'une action principale (freinage de sécurité), mais jamais d'une action directe de l'opérateur sur le dispositif de verrouillage en tant que tel. Ainsi, une action principale (freinage-ralentissement ou relevage) est avantageusement exploitée par détournement pour l'activation et la désactivation du verrouillage en translation de la traverse (4).

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention tel que défini par les revendications annexées.

## Revendications

1. Machine agricole (1) destinée à être déplacée selon une direction d'avance (A) en configuration de travail et en configuration de transport et comprenant un bâti (2) portant au moins un outil (2') et une tête d'attelage (3) pour sa liaison avec un dispositif d'attelage trois points d'un véhicule tracteur, la tête d'attelage (3) comprenant, d'une part, une traverse d'attelage (4) comportant à ses deux extrémités opposées des attaches (5) destinées à venir en engagement avec les deux points d'attelage inférieurs du dispositif d'attelage trois points, et, d'autre part, une pièce (6) d'assemblage articulé pour ladite traverse (4), qui est solidaire du bâti (2) et reçoit cette traverse (4) dans un espace plan de montage (PM) dans lequel elle est mobile avec guidage en translation et en rotation par l'intermédiaire d'une liaison pivot (7) / glissière (8), l'axe (AP) du pivot (7) étant perpendiculaire au plan de l'espace de montage (PM), la glissière (8) étant sensiblement rectiligne et parallèle audit plan et à la direction d'avance (A) et comportant des extrémités avant et arrière (8', 8") opposées, machine (1) dans laquelle lesdits mouvements de rotation relatifs entre la traverse (4) et la pièce d'assemblage articulé (6) sont limités par des butées, respectivement avant (9) et arrière (10) par rapport à la direction d'avance (A), et dans laquelle le pivot (7) est solidaire de la traverse (4) et est en appui contre l'extrémité avant (8') de ladite glissière(8) lorsque ladite machine (1) est soumise à une force de traction selon la direction d'avance (A) par l'intermédiaire de ladite traverse (4),
machine (1) **caractérisée en ce que** la pièce (6) d'assemblage articulé de la tête d'attelage (3) comporte d'une part, un moyen (11) d'accrochage du pivot (7), préférentiellement du type escamotable par pivotement, bloquant sa translation dans la glissière (8) en direction de l'extrémité arrière (8") lorsque cette pièce (6) est soumise à un déplacement relatif selon la direction d'avance (A) par rapport à la traverse d'attelage (4), et, d'autre part, un moyen (12) de sollicitation élastique qui réalise un engagement automatique dudit moyen d'accrochage (11) avec ledit pivot (7) lorsque ce dernier se retrouve positionné dans la glissière (8) au-delà d'une distance déterminée par rapport à l'extrémité arrière (8").

2. Machine selon la revendication 1, **caractérisée en ce que** le moyen d'accrochage (11) comporte un site d'engagement (11') qui est configuré et agencé de telle manière que l'engagement automatique dudit moyen d'accrochage (11) avec le pivot (7) s'opère lorsque ledit pivot (7) arrive à proximité immédiate ou vient en appui contre l'extrémité avant (8') de la glissière (8), ledit pivot (7) étant sensiblement bloqué en translation dans la glissière (8) entre ledit site (11') et ladite extrémité (8') à l'état engagé.

3. Machine selon la revendication 1 ou 2, **caractérisée en ce que** le moyen de sollicitation élastique (12) et le moyen d'accrochage (11), notamment un ou le site d'engagement (11') de ce dernier, sont configurés et agencés de telle manière que l'engagement d'accrochage avec le pivot (7) est maintenu élastiquement et n'est défait que lors d'un soulèvement de la machine (1), sous l'effet de la poussée du poids de cette dernière sur la pièce (6) d'assemblage articulé et le moyen d'accrochage (11).

4. Machine selon l'une quelconque des revendications 1 à 3, **caractérisée en ce que** le moyen d'accrochage (11) comporte un profil de glissement (13) contre lequel vient en appui, sous la contrainte du moyen de sollicitation élastique (12), le pivot (7) lorsqu'il n'est pas en engagement accrochant avec ledit moyen (11), ledit profil de glissement (13) débouchant dans un ou le site (11') d'engagement accrochant dudit pivot (7), à l'une de ses extrémités, et s'étendant par son autre extrémité au-delà de l'extrémité arrière (8') de la glissière (8).

5. Machine selon l'une quelconque des revendications 1 à 4, **caractérisée en ce que** le pivot (7) présente une section circulaire et **en ce que** le moyen d'accrochage (11) comporte un ou le site (11') d'engagement avec ledit pivot (7) qui présente un profil (11") en arc de cercle de forme complémentaire et ouvert sur un côté, ce profil (11") s'étendant angulairement au-delà de l'axe longitudinal (AL) de la glissière (8) lorsque le pivot (7) est engagé dans ledit site (11'), ce d'environ 1° à 15°.

6. Machine selon l'une quelconque des revendications 2 à 4, **caractérisée en ce que** le moyen d'accrochage (11) se présente sous la forme d'un bras monté pivotant sur la pièce d'assemblage articulé (6) et **en ce que** le moyen de sollicitation élastique (12) consiste en un ressort de rappel, l'axe de pivotement (AP') dudit bras (11) étant aligné avec l'axe longitudinal (AL) de la glissière (8) et situé au-delà de l'extrémité avant (8') de celle-ci dans la direction d'avance (A) et ledit moyen d'accrochage (11) comportant un ou le site (11') d'engagement du pivot (7) sous la forme d'un cran, ouvert sur le côté du bras (11) présentant un profil de glissement (13) pour ledit pivot (7), débouchant dans ledit cran (11'), préférentiellement après passage d'un point dur.

7. Machine selon les revendications 4 et 6, **caractérisée en ce que** le moyen de sollicitation élastique (12) est fixé au niveau de l'extrémité libre du bras (11) et **en ce que** ledit profil de glissement (13) s'étend sensiblement entre cette extrémité et le cran (11'), avec une extension longitudinale inférieure à celle de la glissière (8).

8. Machine selon l'une quelconque des revendications 1 à 7, **caractérisée en ce que** la pièce d'assemblage articulé (6) comporte la butée avant (9) formant l'axe de pivotement (AP') du bras (11) et/ou deux butées arrière (10) dont l'une sert de point de fixation au moyen de sollicitation élastique (12).

9. Machine selon l'une quelconque des revendications 1 à 8, **caractérisée en ce que** le moyen d'accrochage (11) et le moyen de sollicitation élastique (12) sont tous deux situés dans l'encombrement latéral de la pièce d'assemblage articulé (6), cette dernière étant avantageusement formée de deux plaques superposées (6' et 6") délimitant entre elles l'espace de montage plan (PM) et assemblées mutuellement par des entretoises formant les butées avant et arrière (9, 10), les moyens (11, 12) précités étant préférentiellement montés sur la plaque (6') supérieure.

10. Machine selon l'une quelconque des revendications 1 à 9, **caractérisée en ce qu'**elle consiste en une charrue, avantageusement munie d'au moins une roue destinée à s'appuyer sur le sol dans la configuration de transport.

11. Procédé de verrouillage automatique en translation de la traverse d'attelage (4) d'une machine agricole (1) selon l'une quelconque des revendications 1 à 10, **caractérisée en ce qu'**il consiste à provoquer, en configuration de transport, un déplacement relatif entre le bâti (2) de la machine (1) et le véhicule tracteur selon la direction d'avance (A) résultant en un déplacement du pivot (7) dans la glissière (8) en direction de l'extrémité avant de cette dernière, ce jusqu'à engagement dudit pivot (7) par le moyen d'accrochage (11).

12. Procédé de déverrouillage automatique en translation de la traverse d'attelage (4) d'une machine agricole (1) selon l'une quelconque des revendications 1 à 10, **caractérisée en ce qu'**il consiste à réaliser un soulèvement de ladite machine (1) par le dispositif d'attelage trois points du véhicule tracteur auquel elle est attelée.

## Patentansprüche

1. Landwirtschaftliche Maschine (1), die dazu bestimmt ist, gemäß einer Vorschubrichtung (A) in Arbeits- und in Transportkonfiguration bewegt zu werden, und ein Gestell (2), das mindestens ein Werkzeug (2') trägt, und einen Kupplungskopf (3) für ihre Verbindung mit einer Dreipunktkupplungsvorrichtung eines Zugfahrzeugs umfasst, wobei der Kupplungskopf (3) einerseits einen Kupplungsquerträger (4), der an seinen beiden gegenüberliegenden Enden Befestiger (5) aufweist, die dazu bestimmt sind, mit den beiden unteren Kupplungspunkten der Dreipunktkupplungsvorrichtung in Eingriff zu kommen, und andererseits ein Teil (6) zur gelenkigen Kupplung für den Querträger (4) umfasst, das fest mit dem Gestell (2) verbunden ist und diesen Querträger (4) in einem ebenen Montagebereich (PM) aufnimmt, in dem er mittels einer Drehgelenk (7)/Gleitschiene (8)-Verbindung translatorisch und rotatorisch geführt beweglich ist, wobei die Achse (AP) des Zapfens (7) senkrecht zur Ebene des Montagebereichs (PM) verläuft, wobei die Gleitschiene (8) im Wesentlichen geradlinig und parallel zu der Ebene und zu der Vorschubrichtung (A) ist und gegenüberliegende Vorder- und Hinterenden (8', 8") umfasst, Maschine (1) bei welcher die relativen Drehbewegungen zwischen dem Querträger (4) und dem Teil (6) zur gelenkigen Kupplung durch Anschläge begrenzt werden, die in Bezug auf die Vorschubrichtung (A) jeweils vorne (9) und hinten (10) liegen, und der Zapfen (7) fest mit dem Querträger (4) verbunden ist und gegen das Vorderende (8') der Gleitschiene (8) anliegt, wenn die Maschine (1) über den Querträger (4) einer Zugkraft in der Vorschubrichtung (A) ausgesetzt ist,
Maschine (1) **dadurch gekennzeichnet ist, dass** das Teil (6) zur gelenkigen Kupplung des Kupplungskopfes (3) einerseits ein Kupplungsmittel (11) für den Zapfen (7) umfasst, das vorzugsweise von einziehbarer Art mittels Schwenken ist und seine Translation in der Gleitschiene (8) in Richtung des Hinterendes (8") blockiert, wenn dieses Stück (6) einer relativen Verschiebung gemäß der Vorschubrichtung (A) in Bezug auf den Kupplungsquerträger (4) unterzogen wird, und andererseits ein Mittel (12) zur elastischen Beanspruchung, welches einen automatischen Eingriff des Kupplungsmittels (11) mit dem Zapfen (7) gewährleistet, wenn Letzterer über einen bestimmten Abstand zum Hinterende (8") hinaus in der Gleitschiene (8) positioniert wird.

2. Maschine nach Anspruch 1, **dadurch gekennzeichnet, dass** das Kupplungsmittel (11) eine Einsatzstelle (11') umfasst, die so ausgestaltet und angeordnet ist, dass der automatische Eingriff des Kupplungsmittels (11) mit dem Zapfen (7) stattfindet, wenn der Zapfen (7) in die unmittelbare Nähe des Vorderendes (8') der Gleitschiene (8) gelangt oder an diesem zur Anlage kommt, wobei der Zapfen (7) im Eingriffszustand im Wesentlichen in der Gleitschiene (8) zwischen der Stelle (11') und dem Ende (8') translatorisch blockiert ist.

3. Maschine nach Anspruch 1 oder 2, **dadurch gekennzeichnet, dass** das Mittel zur elastischen Beanspruchung (12) und das Kupplungsmittel (11), insbesondere eine oder die Einsatzstelle (11') des Letzteren, so ausgestaltet und angeordnet sind, dass der Kupplungseingriff mit dem Zapfen (7) elastisch gehalten wird und erst bei einem Anheben der Maschine (1) durch die Schubwirkung des Gewichts dieser Letzteren auf das Teil (6) zur gelenkigen Kupplung und das Kupplungsmittel (11) gelöst wird.

4. Maschine nach irgendeinem der Ansprüche 1 bis 3, **dadurch gekennzeichnet, dass** das Kupplungsmittel (11) ein Gleitprofil (13) umfasst, gegen welches der Zapfen (7) unter der Belastung des Mittels zur elastischen Beanspruchung (12) anliegt, wenn er sich nicht in Kupplungseingriff mit dem Mittel (11) befindet, wobei das Gleitprofil (13) in eine oder die Stelle (11') für einen Kupplungseingriff des Zapfens (7) an einem seiner Enden mündet und sich mit seinem anderen Ende über das Hinterende (8') der Gleitschiene (8) hinaus erstreckt.

5. Maschine nach irgendeinem der Ansprüche 1 bis 4, **dadurch gekennzeichnet, dass** der Zapfen (7) einen kreisförmigen Querschnitt aufweist und dass das Kupplungsmittel (11) eine oder die Stelle (11') zum Eingriff mit dem Zapfen (7) umfasst, die ein komplementäres und auf einer Seite offenes, kreisbogenförmiges Profil (11") aufweist, das sich winkelig über die Längsachse (AL) der Gleitschiene (8) hinaus erstreckt, wenn der Zapfen (7) in die Stelle (11') eingreift, und dies um etwa 1° bis 15°.

6. Maschine nach irgendeinem der Ansprüche 2 bis 4, **dadurch gekennzeichnet, dass** sich das Kupplungsmittel (11) in Form eines Arms darstellt, der auf dem Teil (6) zur gelenkigen Kupplung schwenkbar angebracht ist, und dass das Mittel zur elastischen Beanspruchung (12) aus einer Rückstellfeder besteht, wobei die Drehachse (AP') des Arms (11) mit der Längsachse (AL) der Gleitschiene (8) ausgerichtet ist und in der Vorschubrichtung (A) jenseits ihres Vorderendes (8') liegt, und das Kupplungsmittel (11) eine oder die Stelle (11') zum Eingriff des Zapfens (7) in Form eines Ausschnitts umfasst, der auf der Seite des Arms (11) offen ist, der ein Gleitprofil (13) für den Zapfen (7) aufweist, der in den Ausschnitt (11') mündet, vorzugsweise nach Passieren eines harten Punktes.

7. Maschine nach den Ansprüchen 4 und 6, **dadurch gekennzeichnet, dass** das Mittel zur elastischen Beanspruchung (12) am freien Ende des Arms (11) befestigt ist und dass sich das Gleitprofil (13) im Wesentlichen zwischen diesem Ende und dem Ausschnitt (11') mit einer geringeren Längsausdehnung als jene der Gleitschiene (8) erstreckt.

8. Maschine nach irgendeinem der Ansprüche 1 bis 7, **dadurch gekennzeichnet, dass** das Teil (6) zur gelenkige Kupplung den Vorderanschlag (9), der die Drehachse (AP') des Arms (11) bildet, und/oder zwei Hinteranschläge (10) umfasst, von denen einer als Befestigungspunkt für das Mittel zur elastischen Beanspruchung (12) dient.

9. Maschine nach irgendeinem der Ansprüche 1 bis 8, **dadurch gekennzeichnet, dass** sich sowohl das Kupplungsmittel (11) als auch das Mittel zur elastischen Beanspruchung (12) innerhalb des seitlichen Platzbedarfs des Teils (6) zur gelenkigen Kupplung befinden, wobei Letzteres vorteilhafterweise von zwei übereinander liegenden Platten (6' und 6") gebildet wird, die zwischen sich den ebenen Montagebereich (PM) begrenzen und durch Zwischenstangen miteinander verbunden sind, welche die Vorder- und Hinteranschläge (9, 10) bilden, wobei die vorgenannten Mittel (11, 12) vorzugsweise auf der oberen Platte (6') montiert sind.

10. Maschine nach irgendeinem der Ansprüche 1 bis 9, **dadurch gekennzeichnet, dass** sie aus einem Pflug besteht, der vorteilhafterweise mit mindestens einem Rad ausgestattet ist, das dazu bestimmt ist, sich in der Transportkonfiguration auf dem Boden abzustützen.

11. Verfahren zur automatischen Translationsverriegelung des Kupplungsquerträgers (4) einer landwirtschaftlichen Maschine (1) nach irgendeinem der Ansprüche 1 bis 10, **dadurch gekennzeichnet, dass** es darin besteht, in der Transportkonfiguration eine Relativbewegung zwischen dem Gestell (2) der Maschine (1) und dem Zugfahrzeug (3) gemäß der Vorschubrichtung (A) zu bewirken, was zu einer Verschiebung des Zapfens (7) in der Gleitschiene (8) in Richtung des Vorderendes der Letzteren führt, bis zum Eingriff des Zapfens (7) durch das Kupplungsmittel (11).

12. Verfahren zur automatischen Translationsentriegelung des Kupplungsquerträgers (4) einer landwirtschaftlichen Maschine (1) nach irgendeinem der Ansprüche 1 bis 10, **dadurch gekennzeichnet, dass** es darin besteht, ein Anheben der Maschine (1) durch die Dreipunktkupplungsvorrichtung des Zugfahrzeugs, an das sie angekuppelt ist, auszuführen.

## Claims

1. Agricultural machine (1) intended to be moved in a direction of advance (A) in work configuration and in transport configuration and comprising a frame (2) carrying at least a tool (2') and a coupling head (3) for its connection to a three point hitching device of a tractor vehicle, the coupling head (3) comprising, on the one hand, a hitching crossbar (4) with fasteners (5) at its two opposite ends, intended to engage with the two lower hitching points of the three point hitching device and, on the other hand, an articulated coupling part (6) for the said crossbar (4), which is rigidly fastened to the frame (2) and receives this crossbar (4) in a flat assembly space (PM) in which it is movable with translational and rotational guidance by means of a pivot (7) / slide (8) connection, the axis (AP) of the pivot (7) being perpendicular to the plane of the assembly space (PM), the slide (8) being substantially rectilinear and parallel to the said plane and to the direction of advance (A) and having opposite front and rear ends (8', 8"), machine (1) in which the said relative rotational movements between the crossbar (4) and the articulated coupling part (6) are limited by stops, respectively front (9) and rear (10) in relation to the direction of advance (A), and in which the pivot (7) is rigidly fastened to the crossbar (4) and rests against the front end (8') of the said slide (8) when the said machine (1) is subjected to a traction force in the direction of advance (A) by means of the said crossbar (4),
machine (1) **characterized in that** the articulated coupling part (6) of the coupling head (3) comprises, on the one hand, a hitching means (11) for the pivot (7), preferably of the type that can be retracted by rotating, locking its translation in the slide (8) in the direction of the rear end (8") when this part (6) is subjected to a relative displacement in the direction of advance (A) in relation to the hitching crossbar (4) and, on the other hand, an elastic stressing means (12) which automatically engages the said hitching means (11) with the said pivot (7) when the latter is positioned in the slide (8) beyond a given distance from the rear end (8").

2. Machine according to claim 1, **characterized in that** the hitching means (11) comprises an engagement point (11') which is configured and arranged in such a way that the automatic engagement of the said hitching means (11) with the pivot (7) takes place when the said pivot (7) comes into close proximity to or rests against the front end (8') of the slide (8), the said pivot (7) being substantially locked in translation in the slide (8) between the said point (11') and the said end (8') in the engaged state.

3. Machine according to claim 1 or 2, **characterized in that** the elastic stressing means (12) and the hitching means (11), in particular an or the engagement point (11') of the latter, are configured and arranged in such a way that the hitching engagement with the pivot (7) is maintained elastically and is only released when the machine (1) is lifted, under the thrust of the weight of the latter on the articulated coupling part (6) and the hitching means (11).

4. Machine according to any one of claims 1 to 3, **characterized in that** the hitching means (11) comprises a sliding profile (13) against which the pivot (7) rests, under the stress of the elastic stressing means (12), when it is not in hitching engagement with the said means (11), the said sliding profile (13) opening into an or the hitching engagement point (11') of the said pivot (7), at one of its ends, and extending by its other end beyond the rear end (8') of the slide (8).

5. Machine according to any one of claims 1 to 4, **characterized in that** the pivot (7) has a circular cross-section and **in that** the hitching means (11) comprises an or the engagement point (11') with the said pivot (7), which has a circular arc profile (11") of complementary shape and open on one side, this profile (11") extending angularly beyond the longitudinal axis (AL) of the slide (8) when the pivot (7) is engaged in the said point (11'), by approximately 1° to 15°.

6. Machine according to any one of claims 2 to 4, **characterized in that** the hitching means (11) is in the form of an arm mounted such that it can pivot on the articulated coupling part (6) and **in that** the elastic stressing means (12) consists of a return spring, the rotation axis (AP') of the said arm (11) being aligned with the longitudinal axis (AL) of the slide (8) and located beyond the front end (8') thereof in the direction of advance (A) and the said hitching means (11) comprising an or the engagement point (11') of the pivot (7) in the form of an indentation, open on the side of the arm (11), having a sliding profile (13) for the said pivot (7), opening into the said indentation (11'), preferably after passing a hard spot.

7. Machine according to claims 4 and 6, **characterized in that** the elastic stressing means (12) is fixed at the free end of the arm (11) and **in that** the said sliding profile (13) extends substantially between this end and the indentation (11'), with a longitudinal extension less than that of the slide (8).

8. Machine according to any one of claims 1 to 7, **characterized in that** the articulated coupling part (6) comprises the front stop (9) forming the rotation axis (AP') of the arm (11) and/or two rear stops (10), one of which serves as a fixing point for the elastic stressing means (12).

9. Machine according to any one of claims 1 to 8, **characterized in that** the hitching means (11) and the elastic stressing means (12) are both located within the lateral dimensions of the articulated coupling part (6), the latter being advantageously formed by two superimposed plates (6' and 6") delimiting between them the flat assembly space (PM) and assembled together by spacers forming the front and rear stops (9, 10), with the aforementioned means (11, 12) preferably mounted on the upper plate (6').

10. Machine according to any one of claims 1 to 9, **characterized in that** it consists of a plow, advantageously equipped with at least one wheel intended to rest on the ground in the transport configuration.

11. Automatic translational locking method of the hitching crossbar (4) of an agricultural machine (1) according to any one of claims 1 to 10, **characterized in that** it involves causing, in the transport configuration, a relative displacement between the frame (2) of the machine (1) and the tractor vehicle in the direction of advance (A), resulting in a displacement of the pivot (7) in the slide (8) towards the front end of the latter, until the said pivot (7) is engaged by the hitching means (11).

12. Automatic translational unlocking method of the hitching crossbar (4) of an agricultural machine (1) according to any one of claims 1 to 10, **characterized in that** it consists in carrying out a lifting of the said machine (1) by the three point hitching device of the tractor vehicle to which it is coupled.
